# EUROPEAN PATENT APPLICATION

(11) **EP 4 749 569 A1**
(43) Date of publication of application: **27.05.2026**
(21) Application number: 24214107.5
(22) Date of filing: 20.11.2024
(51) Int. Cl.: G06T 7/246

(54) **METHOD FOR ENABLING TRACKING OF AN OBJECT IN A FLOW CHANNEL**

(71) Applicant: Imec VZW, 3001 Leuven (BE)
(72) Inventor: LUO, Zhenxiang, 3000 Leuven (BE); JAYAPALA, Murali, 3300 Kumtich (BE); LIN, Ziduo, 3001 Heverlee (BE); YURT, Abdulkadir, 3001 Heverlee (BE); VAN ROY, Willem, 3360 Bierbeek (BE); STAKENBORG, Tim, 3001 Heverlee (BE)
(74) Representative: AWA Sweden AB

(57) **Abstract**

According to an aspect of the present inventive concept there is provided a method for enabling tracking of an object in a flow channel comprising: receiving a first plurality of sequences of images; generating a first map, wherein said generating comprises: tracking the first plurality of training objects; determining movements of the first plurality of training objects; defining a first set of movement vectors; receiving a second plurality of sequences of images; generating a second map, wherein said generating comprises: tracking the second plurality of training objects; determining movements of the second plurality of training objects; defining a second set of movement vectors; generating a tracking map based on the second map; wherein a condition of the flow of liquid in the flow channel or of acquiring of sequences of images is changed between the first plurality of sequences of images and the second plurality of sequences of images.

## Description

### Technical field

The present description relates to a method for enabling tracking of an object in a flow channel.

### Background

Following objects while the objects move through a microfluidic system is a common way of analyzing behavior or changes in behavior. Treatments or other modifications of the objects may change their behavior, making it important to efficiently monitor objects. This can be made by tracking of the individual objects through the microfluidic system.

However, there are many challenges connected to the tracking. Tracking algorithms are commonly based on predictions of the next position of the object. The algorithm predicts the position of an object in a frame based on the position of the object in the previous frame, thus the closeness of a position of an object between two frames are a major input to the tracking algorithm. However, the position of an object in a frame is based on more than the position in the previous frame. The complexity of the microfluidic system, the flow of the liquid and the concentration of objects in the system may affect the movement of the object such that the prediction is wrong. Thus, there is a need for improvements in the art.

### Summary

An objective of the present description is to provide a method for enabling tracking of an object in a flow channel. It is a further objective to provide a method for enabling label-free tracking of an object. It is a further object to provide a method for enabling tracking of an object in a complex flow channel.

According to a first aspect, there is provided a method for enabling tracking of an object in a flow channel, the method comprising: receiving a first plurality of sequences of images representing movement of a first plurality of training objects carried through the flow channel in a first flow of liquid; generating a first map representing associations between locations in the flow channel and movement vectors from the first plurality of sequences of images, wherein said generating comprises: tracking each of the first plurality of training objects in the sequences of images; determining movements of each of the first plurality of training objects between two consecutive images in the first plurality of sequences of images; defining a first set of movement vectors associated with locations in the flow channel based on the determined movements for each of the first plurality of training objects; receiving a second plurality of sequences of images representing movement of a second plurality of training objects carried through the flow channel in a second flow of liquid; generating a second map representing associations between locations in the flow channel and movement vectors from the second plurality of sequences of images, wherein said generating comprises: tracking each of the second plurality of training objects in the sequences of images by applying the first map on the flow channel; determining movements of each of the second plurality of training objects between two consecutive images in the second plurality of sequences of images; defining a second set of movement vectors associated with locations in the flow channel based on the determined movements for each of the second plurality of training objects; generating a tracking map based on the second map, wherein the tracking map represents associations between locations in the flow channel and movement vectors enabling tracking of the object in the flow channel; wherein a condition of the flow of liquid in the flow channel or of acquiring of sequences of images is changed between the first plurality of sequences of images and the second plurality of sequences of images.

The method may be a computer-implemented method. Thus, according to the first aspect there may be provided a computer-implemented method for enabling tracking of an object in a flow channel.

In some settings, accurate tracking of an object passing through a flow channel can be very difficult to achieve. For instance, tracking may be affected by complexity of the flow channel, the flow of liquid in the flow channel, a number of other objects moving together with the object through the flow channel, and by other external factors. It is a realization of the first aspect that accurate tracking may be achieved by building a tracking map over the flow channel.

According to the method, a first plurality of training objects in a first flow are used for generating a first map. Then, tracking of a second plurality of training objects in a second flow is performed by applying the first map on the flow channel, and a second map is generated. This implies that a map of the flow channel may be generated in at least two steps.

Conditions for tracking of the first plurality of training objects in the first flow may thus be more simple than conditions for tracking of the second plurality of training object. For instance, conditions for tracking of the second plurality of training objects may be so difficult that forming of an accurate map representing movement of the second plurality of training objects in the second flow may not be possible without any prior knowledge of flow through the flow channel. However, thanks to the tracking of the second plurality of training objects applying the first map on the flow channel, knowledge of movements of the first plurality of training objects in the first flow may be used for allowing generating of an accurate second map. Hence, by dividing generation of a tracking map into at least two steps with different conditions, the method enables forming a tracking map for tracking of objects in a complex flow through the flow channel.

The method may be configured to generate a tracking map that is to be used for tracking objects in particular conditions for tracking of the objects.
The method for enabling tracking of objects may thus generate maps that are associated with gradually more complex conditions for tracking for each step, where the conditions are gradually changed towards conditions to be used for tracking objects after the tracking map has been generated.

It should be realized that a relatively slow speed of the flow and/or relatively few (low concentration of) training objects in the flow may provide conditions for which tracking is simpler compared to a higher speed of the flow and/or a higher number (concentration) of training objects.

The first and second map (and possible further maps formed during iterations for generating the tracking map) may take into consideration the behavior of the objects moving through the flow channel under different conditions. The tracking map may be built by iterations where the conditions are progressively made harder for the tracking.

The objects to be tracked may be biological cells, biological objects such as extracellular vesicles such as exosomes and/or other lipid nanoobjects or synthetic (bio)objects displaying specific antigens/receptors e.g. used for drug delivery.

It should be realized that the training objects may also be biological cells, biological objects or synthetic (bio)objects. Thus, the method may use the same type of objects for training and in actual use of the tracking map for tracking of objects. However, the training objects may be another type of objects which may exhibit same or corresponding movements through the flow channel. For instance, the training objects may have corresponding size and/or shape as the objects to be tracked using the tracking map. The training objects may for instance be small plastic beads.

The method comprises receiving a first plurality of sequences of images representing movement of a first plurality of training objects carried through the flow channel in a first flow of liquid. Thus, the first plurality of sequences of images represents a sequence of images presenting how the first plurality of objects are carried through the flow channel. Each image in the first plurality of sequences of images may image a same portion of the flow channel, such as the entire portion of the flow channel in which tracking of objects is to be performed. Alternatively, each image may represent a plurality of different positions in the flow channel, such that the training objects appear in several of the images representing different parts of the flow channel while moving through the flow channel.

Each sequence of images may represent movement of at least one training object through the flow channel. Each sequence of images may be formed by a plurality of sequential still images acquired of the flow channel while the plurality of training objects is carried through the flow channel. Alternatively, each sequence of images may be formed by a plurality of frames in a video sequence acquired of the flow channel while the plurality of training objects is carried through the flow channel.

The first plurality of training objects may have similar dynamic properties as the object. Thus, the training object may have the same size, mass, shape as the object. The first plurality of training objects may comprise 10, 20, 40, 60, 80 or 100 objects per ml of liquid. The number of training object may depend on the type of objects.

The method further comprises generating a first map representing associations between locations in the flow channel and movement vectors from the first plurality of sequences of images. While training objects move through the flow channel, the structure and complexity of the flow channel may affect how the training objects (and objects to be tracked) are moving. As an example, a flow channel comprising many bends, such as a flow channel having a serpentine structure, may give a movement pattern of the training objects and objects to be tracked differing from a movement pattern in a straight flow channel.

Thus, for a plurality of locations in the flow channel, movement vectors are generated and together with all movement vectors from the first plurality of sequences of images a first map is generated.

Movement vectors may be generated from a sequence of images which all represent the same field of view of the flow channel. In other words, the sequence of images may comprise a time-lapse of images of the same field of view. Alternatively, the sequence of images may be acquired at different position of the flow channel such that the field of view of each image covers only a part of the flow channel. The sequence of images may together cover the entire flow channel and two consecutive images of the sequence of images may at least be acquired edge to edge such that there are no gaps of the flow channel between the images. In this alternative, the training objects and the objects move through images of different fields of view and the movement vectors represents locations in images of different fields of view.

By having the fields of view of the first plurality of sequences of images covering a large part or an entire part of the flow channel, objects moving through the flow channel may be closely followed. This may allow all aspects of the flow of the objects to be represented in the first plurality of sequences of images.

The generation of the first map comprises tracking each of the first plurality of training objects in the sequences of images. By tracking each of the training objects, the individual movement of each of the plurality of objects, through the flow channel, can be followed. Thus, both similarities and differences in movement pattern of the first plurality of training objects may be identified.

The generation of the first map further comprises determining movements of each of the first plurality of training objects between two consecutive images in the first plurality of sequences of images. The movement between two consecutive images for each of the training object are determined from the tracking, i.e., by the same training object being identified in consecutive images. The movement of the training object from a first location in a first image to a second location in a second image may thus be determined and may form a movement vector describing the probable movement of a training object in the first location of the flow channel. Thus, from tracking the objects, the movement between two consecutive images can be extracted and converted to movement vectors.

The generation of the first map further comprises defining a first set of movement vectors associated with locations in the flow channel based on the determined movements for each of the first plurality of training objects. For each location in the flow channel, one or a plurality of movements may be determined for one or more training objects appearing in the location during the sequences of images. The first map may thus be generated by, for each location, using a single determined movement for a single training object for defining the movement vector associated with the location, or combining the determined movements for the location. It may for instance comprise calculating an average movement vector based on the determined movements for each location, by calculating an average movement vector from vectors generated from several training objects representing determined movements for the training objects.

By this, the first map comprises movement vectors comprising information of the movement of the first plurality of training objects through the flow channel. The first map may be generated to provide movement vectors associated with each location in the flow channel. The locations in the flow channel may be defined based on a desired resolution of the first map. The first plurality of sequences of images may comprise a sufficient number of images to allow determining the first set of movement vectors with a desired resolution of the images.

It should also be realized that movement vectors in some locations may be based on movement vectors determined for neighboring locations. This may for instance be used for locations through which no training objects pass in the first plurality of sequences of images, such as in locations close to a bend in which training objects rarely travel. Alternatively or additionally, some locations may not have any movement vector associated with the location, if the first plurality of sequences of images do not provide information for determining a movement vector for the location.

The method further comprises generating a second map representing associations between locations in the flow channel and movement vectors from the second plurality of sequences of images.

The generation of the second map comprises tracking each of the second plurality of training objects in the sequences of images by applying the first map on the flow channel. By applying the first map on the flow channel, the information of the first map is used to better predict the movement of the second plurality of training objects through the flow channel. Thus, the tracking of the second plurality of training objects is made on the combination of the information of first map and the second plurality of sequences of images. The information of the first map may be used for ensuring that the same training object may be identified in consecutive images in the second plurality of sequences of images such that the movement of the second plurality of training objects may be accurately followed.

The generation of the second map further comprises determining movements of each of the second plurality of training objects between two consecutive images in the second plurality of sequences of images based on the training objects being identified in consecutive images. The movement of each of the second training objects are determined from the second tracking.

The generation of the second map further comprises defining a second set of movement vectors associated with locations in the flow channel based on the determined movements for each of the second plurality of training objects. The second map may be formed solely on the determined movements of the second plurality of training objects, wherein the possibility of determining the movements of the second plurality of training objects is provided thanks to the first map being applied during tracking of the second plurality of training objects. The second map may however be formed based on the first map such that the determined movements of the second plurality of training objects may be used for adjusting the first set of movement vectors, e.g., by adding the determined movements of the second plurality of training objects to update a calculated average movement vector.

The method further comprises generating a tracking map based on the second map, wherein the tracking map represents associations between locations in the flow channel and movement vectors enabling tracking of the object in the flow channel. The generating of the tracking map may be viewed as being based also on the first map, as the first map is at least applied for allowing tracking of the second plurality of training objects.

The generating of the tracking map may be directly formed by the second map. Thus, the method for generating of the tracking map may be finished when the second map is generated and the second map forms the tracking map which may then be used for tracking of objects in the flow channel. However, according to an alternative, the second map and further maps may be used for enabling tracking of further pluralities of training objects. Thus, the generating of the tracking map may be based on the second map by the second map (and further maps) being applied for allowing tracking of further pluralities of training objects.

Thanks to the fact that the tracking map is generated in a stepwise manner, the processing of the data is improved, such that computer resources are saved, and a result can be achieved faster.

A condition of the flow of liquid in the flow channel or of acquiring of sequences of images is changed between the first plurality of sequences of images and the second plurality of sequences of images.

For example, the condition may be a change in the flow speed, a change in the rate of which the sequence of images is acquired of a change in the number of objects. All of those conditions may affect the tracking of a movement of a specific object through the flow channel. Thus, by changing the conditions, the tracking map generated from the first and second map comprises information based on different conditions.

The second map may be generated at a more difficult condition than the first map. For instance, the flow speed may be increased, the number of second objects may be larger than the number of first objects, or the rate of the images in the sequence of images may be faster in the second plurality of sequences of images than in the first plurality of sequences of images. It should be realized that an increased number of training objects may affect the movement of the training objects (due to interactions between training objects) but an increased number of training objects may also imply that tracking of training objects is more difficult as training objects close to each other may need to distinguished from each other.

According to one embodiment the method may further comprise: iteratively receiving a further plurality of sequences of images representing movement of a further plurality of training objects carried through the flow channel in a further flow of liquid; and generating a further map representing associations between locations in the flow channel and movement vectors from the further plurality of sequences of images, wherein said generating comprises: tracking each of the further plurality of training objects in the sequences of images by applying a map generated in a previous iteration on the flow channel; determining movements of each of the further plurality of training objects between two consecutive images in the further plurality of sequences of images; defining a further set of movement vectors associated with locations in the flow channel based on the determined movements for each of the further plurality of training objects; wherein a condition of the flow of liquid in the flow channel or of acquiring of sequences of images is changed between each iteration, wherein generating the tracking map is further based on the further map generated in a final iteration.

Thus, the method may comprise several iterations before generating the tracking map. It should be understood that the method may comprise iteratively performing the acquiring and the generating of the further map.

The condition of the flow of liquid in the flow channel and/or of acquiring of sequences of images may be changed between each iteration. The condition may change in different ways between the different iterations. Thus, the condition may change such that the number of training objects are changed, the speed of the flow of liquid is changed or the acquisition rate of the sequences of images are changed.

An advantage with using several iterations for generating the tracking map is that it provides the final tracking map with more data from the different iterations. In addition, using several iterations may allow the method to accurately form maps for progressively more difficult conditions for tracking of object, such that an accurate tracking map that is applicable to very difficult conditions may be eventually formed.

Imaging should be understood as any conventional microscopic imaging, such as for instance using bright filed microscopy or phase contrast microscopy. However, the imaging may alternatively be made using digital holography. If digital holography is used, it should be understood that the images may correspond to representations of an acquired interference pattern of scattered and non-scattered light. Thus, the acquired interference pattern may not necessarily be used for reconstruction of a visual representation of the movement of the objects through the flow channel. The identification of the training objects and the objects, needed for the generating the first and second map, may be made from the interference pattern or from a fully or partly reconstructed visual representation.

According to one embodiment the conditions of the flow of liquid in the flow channel and of acquiring of sequences of images in the final iteration may correspond to conditions to be used for tracking of the objects in the flow channel.

The conditions may be changed one or several times during the performance of the method. Thus, during the method, the conditions may be varied from a simpler condition to a harder condition such that in the final condition the condition may represent the conditions to be used for tracking of the objects in the flow channel.

As an example, the number of training objects may be increased during the iterations until they reach the concentration of objects to be used for tracking of the objects. The speed of the flow of liquid may be changed during the iterations such that it represents the speed to be used when tracking of the objects. Further, the acquisition rate of the sequences of images may be changed to represent the acquisition rate for the tracking of the objects.

An advantage of this is that the final iteration will strongly match the conditions of the tracking of the objects, such that the method enables accurate tracking of the object in the flow channel.

According to one embodiment generating the tracking map may comprise extrapolating information in the further map for representing associations between extrapolated locations in the flow channel and movement vectors, wherein the extrapolated locations are not associated with a movement vector in the further map generated in the final iteration.

This implies that even if the map generated in the final iteration does not provide an association of a particular location with a movement vector (e.g., because no training object during the iterations have passed through the location), the tracking map may be generated to provide associations between all locations in the flow channel and movement vectors.

An extrapolated location may be associated with a movement vector based on movement vectors associated with neighboring locations.

According to one embodiment the condition may comprise the speed of the flow of liquid. Thus, the speed of the flow of liquid may be changed such that it increases between iterations of the method or such that it decreases between iterations. The speed of liquid may affect how the training objects move through the flow channel, such that they are forced by several forces of the flow of liquid into different positions of the flow channel. Moreover, different objects may require different speed of the liquid to move properly through the flow channel and thereby the speed may be changed over the iterations such that it becomes more close to the speed needed for the final tracking map to be close to the condition needed for tracking of the objects.

According to one embodiment the condition may comprise the number of training objects in the flow of liquid. Thus, the condition may comprise the concentration of objects in the flow of liquid. The concentration of training objects may affect the behavior of each of the plurality of training objects, as they may interact with each other while moving through the flow channel. More training objects may further make it harder for the tracking of individual training objects, as they are more probable to cross paths and thereby be misinterpreted by the tracking. By increasing the number of training objects or the concentration of the objects, the method is increasingly harder but by always using the previous map for the further tracking, proper identification of the same object in consecutive images may be improved to allow determining accurate movement vectors. This allows the final tracking map to represent movement of objects with a large concentration of objects in the flow.

According to one embodiment the condition may comprise a frame rate of acquisition of the sequences of images, wherein acquisition of the first plurality of sequences of images is made at a first frame rate and the acquisition of the second plurality of sequences of images is made at a second frame rate, the first frame rate being higher than the second frame rate.

At first, the method may a fast frame rate of images to properly track the training objects. When using the previous map to a further iteration of the method, a lower frame rate of images may be allowed as the previous map aids in properly tracking training objects.

A high frame rate may be associated with a high power consumption. Thus, when the tracking map is used for tracking of objects, a low frame rate may be desired such that low power consumption may be achieved.

Thus, by using a progressively lower frame rate, power consumption may be decreased for each iteration as the method iteratively generates the tracking map.

According to one embodiment the receiving of the first plurality of sequences of images representing movement of the first plurality of training objects carried through the flow channel in the first flow of liquid may comprise receiving information of the vertical positions of the first plurality of training objects in the flow channel, wherein the generation of the first map representing associations between locations in the flow channel and movement vectors from the first plurality of sequences of images further comprises determining vertical movements of each of the first plurality of training objects, wherein the defining of the first set of movement vectors comprises defining the first set of movement vectors in three dimensions; wherein the receiving of the second plurality of sequences of images representing movement of the second plurality of training objects carried through the flow channel in the second flow of liquid may comprise receiving information of vertical positions of the second plurality of training objects in the flow channel, wherein determining movements of each of the second plurality of training objects between two consecutive images in the second plurality of sequences of images further comprises determining vertical movements of each of the second plurality training objects and wherein the defining of the second set of movement vectors comprises defining the second set of movement vectors in three dimensions.

As the flow channel provides a three dimensional channel for the training objects to move through, information of the vertical positions of the training objects may further improve the final tracking map. Thus, if the training objects have a large movement in the vertical direction between the images of the plurality of sequence of images, this information may further improve the final tracking map.

However, it should be realized that in other embodiments, the tracking map may only represent two-dimensional movements of objects along an extension of the flow channel.

According to one embodiment the object may be a biological cell and wherein: the flow channel may comprise at least one zone, each zone of the flow channel being associated with a cell category, wherein each zone of the flow channel comprises at least one surface coated with molecules having an affinity to the cell category associated with the zone, the at least one surface of the zone being configured to modify, by the molecules coating the at least one surface, a movement of a cell belonging to the associated cell category of the zone as the cell carried by the flow of liquid passes the zone, whereby the at least one surface forms at least one cell movement modifying, CMM, surface, wherein a cell belonging to the cell category is a cell exhibiting at least one modified movement in one zone of the flow channel.

Cells may be characterized by the molecules they comprise, such as the molecules they comprise, for instance, by molecules comprised in the cell membrane. Molecules comprised in the cell membrane may e.g. be antigens.

A way of checking whether a surface of an object comprises a certain object surface molecule may be to let the object interact with a molecule that binds specifically to said object surface molecule.

For example, an antigen may correspond to one or more antibodies, where the antigen and antibody bind specifically to each other. Consequently, cells may be divided into cell categories depending on which cell membrane molecules they comprise or which molecules the cells bind to. For example, the antigen CD4 (cluster of differentiation 4) molecule in cell membranes is a glycoprotein which binds to anti-CD4 antibodies. Cells that bind to anti-CD4 antibodies may form one cell category. Such cells may be detected based on their modified movements when they travel through a zone with a CMM surface coated by anti-CD4 antibodies. Analogously, cells that bind to anti-CD8 (cluster of differentiation 8) antibodies may form another cell category. Such cells may be detected based on their modified movements when they travel through a zone with a CMM surface coated by anti-CD8 antibodies.

Thus, a cell category may be a category of cells which binds to a specific molecule such as an antibody. A cell category may be a category of cells that may have differences in the expression level of a certain molecule comprised in the cell membrane. Different cells may have different levels of expression of a molecule at the cell membrane, this may be relevant to be able to categorize. A combination of molecules expressed on the cell membrane and the number of molecules expressed on the cell membrane may place the cell in several cell categories, which may render a certain categorization. Each cell may belong to different combinations of cell categories.

The molecules coating at least one CMM surface of the at least one zone of the flow channel may comprise at least one of: antibodies, nanobodies, aptamers, lectins, receptors, antigens or molecularly imprinted polymers (MIPs). Antibodies, or nanobodies, or aptamers, or lectins, or receptors, or antigens or MIPs may have an affinity to specific cell categories but not to other cell categories. Antibodies, or nanobodies, or aptamers, or lectins, or receptors, or antigens or MIPs may bind to cell object categories but not to other cell categories. Antibodies, or nanobodies, or aptamers, or lectins, or receptors, or antigens or MIPs may have a high sensitivity in binding to a cell category. Thus, the percentage of true positive binding events may be high. Antibodies, or nanobodies, or aptamers, or lectins, or receptors, or antigens or MIPs may have a high specificity in binding to a cell category. Thus, the percentage of false positive binding events may be low. Alternatively, the molecules coating at least one CMM surface of the at least one zone of the flow channel may comprise other molecules than antibodies, nanobodies, aptamers, lectins, receptors, antigens and MIPs e.g. comprise other molecules that bind specifically to a cell membrane molecule.

The training objects of the method may not interact with the CMM surface. As such, the training objects may move freely past the CMM surface and the first and second map represents associations between locations in the flow channel and movement vectors form the first and second plurality of sequences of images, respectively, without any interactions from the training objects. Thus, the final tracking map comprises information regarding training objects moving over the CMM without interaction. This may be used as a reference for tracking the biological cells over the CMM surface, as deviations in movement between a prediction provided by the tracking map and actual movements by the cells which are interacting with the CMM surface may be large.

Thus, this improves label-free cell categorization, and optionally label-free cell sorting.

According to a second aspect, there is provided a method for tracking an object in a flow channel, said method comprising: receiving a sequence of images of a flow of liquid including the object through the flow channel; tracking the object through the sequence of images, wherein the tracking comprises: applying a tracking map on the flow channel, wherein the tracking map is generated by the method according to above.

This aspect may generally present the same or corresponding advantages as the former aspect. Effects and features of this second aspect are largely analogous to those described above in connection with the first aspect. Embodiments mentioned in relation to the second aspect are largely compatible with the first aspect.

The tracking of the object is improved by the application of the tracking map on the flow channel. The tracking map comprises information of how training objects during at least two conditions has moved through the flow channel. Using this information, the tracking of the object is improved as it is probable that the object has a similar movement through the flow channel as the training objects.

According to one embodiment, the method according to the second aspect may comprise generating the tracking of each object through the plurality of sequences of images by comparing the position of each object in each position of the flow channel to the applied movement map.

By this, the tracking is at each position compared to how the training object has moved at that position. This increases the possibility that the tracking of the object in each position is correct. This may be advantageous if flow through the flow channel has a configuration which has especially hard tracking conditions, such as a plurality of bends of the flow channel, or if the acquisition rate of the images must be kept very low.

According to a third aspect, there is provided a computer program product comprising computer-readable instructions such that when executed on a processor the computer program product will cause the processor to perform the method according to the first aspect.

This aspect may generally present the same or corresponding advantages as the former aspect. Effects and features of this third aspect are largely analogous to those described above in connection with the first and second aspects. Embodiments mentioned in relation to the third aspect are largely compatible with the first and second aspects.

The computer program product may thus provide computer-readable instructions for allowing the method to be implemented. This allows the functionality of the method to be provided to any processor.

The computer program product may comprise a non-transient computer-readable medium for carrying the computer-readable instructions. Alternatively, in other embodiments, the computer program product may comprise a signal carrying the computer-readable instructions, e.g., for communicating the computer program product to the processing unit through wired or wireless communication.

According to a fourth aspect, there is provided an imaging system for enabling tracking of an object in a flow channel, the imaging system comprising: a light source configured to illuminate a first plurality of training objects and a second plurality of training objects respectively carried through the flow channel; an imaging sensor configured for detecting incident light from the light source; a processor configured for processing the information acquired by the imaging sensor from the detected incident light; wherein the processor is further configured to perform the method according to the first aspect or the method according to the second aspect.

This aspect may generally present the same or corresponding advantages as the former aspect. Effects and features of this fourth aspect are largely analogous to those described above in connection with the first, second and third aspects. Embodiments mentioned in relation to the fourth aspect are largely compatible with the first, second and third aspects.

The imaging system is configured for detecting the first plurality of training objects and the second plurality of the training objects.

The light source may herein be a coherent light source, e.g. a laser, or a partially coherent light source, e.g. a light emitting diode or a light emitting diode with a pin hole or aperture.

While illuminating the first plurality of training objects and the second plurality of training objects, respectively, an interference pattern may be formed between light being scattered by the illuminated any of the respectively set of training objects and non-scattered light from the light source. In other words, the light source illuminates the flow channel carrying the first and second plurality of training objects. Rays of the illumination light may be scattered while interfering with an object, when other rays are non-scattered. The non-scattered light may be non-scattered as it travels between the training objects or as it travels in an own light path outside of the flow channel. The scattered and non-scattered light interferes an interference pattern may be formed on the imaging sensor.

The imaging system further comprises a processor which processes the information acquired from the image sensor. The imaging system may e.g. perform a holographic reconstruction of two interference patterns in the time-sequence of interference patterns, to construct the first plurality of sequences of images and the second first plurality of sequences of images.

Thus, the processor is further configured to perform the method according to the first aspect or the method according to the second aspect.

The processor may be arranged in a common housing with the image sensor and may be configured to receive the interference patterns in the time-sequence of interference patterns directly from the image sensor for performing a holographic reconstruction, if such an interference pattern is acquired by the imaging sensor. However, according to an alternative, the information acquired by the imaging sensor from the detected incident light, such as for instance an interference pattern in the time-sequence of interference patterns, may be communicated through wired or wireless communication to the processor. Thus, the processor may be physically arranged anywhere in relation to the image sensor, such as being arranged in a server "in the cloud".

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1a-f is a flow channel comprising training objects.
Fig. 2a-b is a flow channel comprising an object.
Fig. 3 is a flow channel comprising a zone.
Fig. 4 is a flow chart of a method for enabling tracking of an object.
Fig. 5 is a flow chart of a method for tracking of an object.
Fig. 6 is an imaging system.

### Detailed description

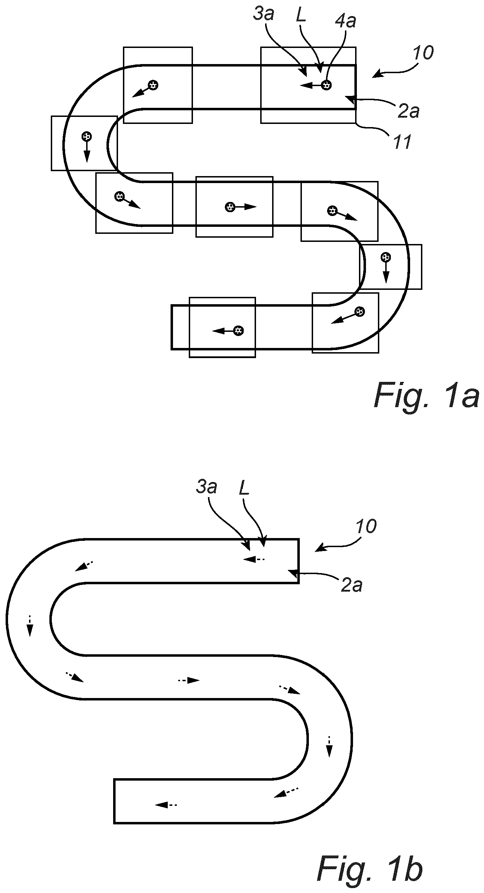

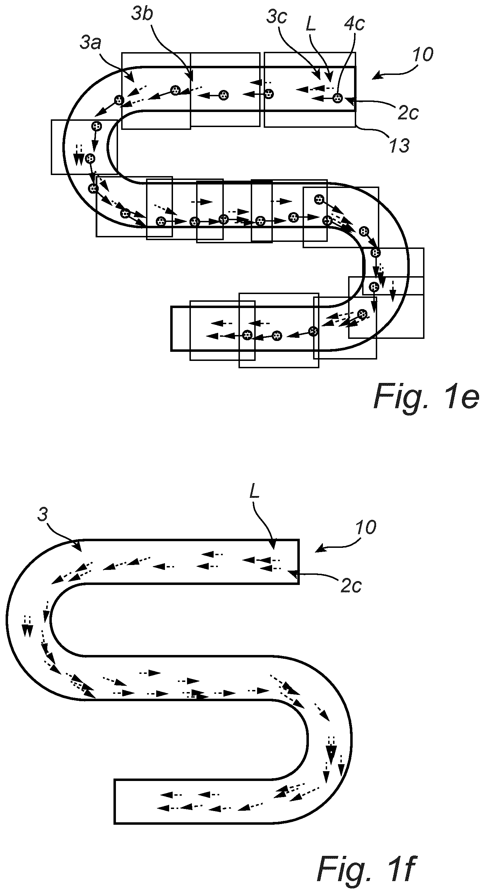

Fig. 1a-f illustrates a flow channel 10 comprising a flow of liquid 2. The flow of liquid is configured for carrying an object. The flow channel 10 may be a microfluidic channel. The flow channel 10 may be defined in any manner, such as using conventional manufacturing technology, for example involving lithography. The flow channel 10 may for instance be formed in a suitable material, which may be transparent to wavelengths used in detecting objects in the flow channel 10. The flow channel 10 may for instance be formed in glass, polydimethylsiloxane (PDMS), or polycarbonate. The top part of the flow channel 10 may be covered with a cover slide, e.g. a glass slide, bonded to the PDMS.

In Fig. 1a-f, the flow channel 10 is illustrated having an S shape. However, it should be understood that the flow channel 10 may have any shape.

The objects may be biological cells, biological objects such as extracellular vesicles such as exosomes and/or other lipid nanoobjects or synthetic (bio)objects displaying specific antigens/receptors e.g. used for drug delivery.

For analyzing the object, tracking of the object may be preferred, as tracking allows for the object to be followed through the flow channel 10. However, while moving through the flow channel 10, the object may move differently depending on conditions such as the shape of the channel 10, the number of objects, the speed of the flow of liquid 2 carrying the object and other variables. Those conditions may influence the tracking. Moreover, for tracking of an object images over the flow channel 10 are required. The frame rate of the image acquisition and the total field of view of the images acquired may also influence the tracking.

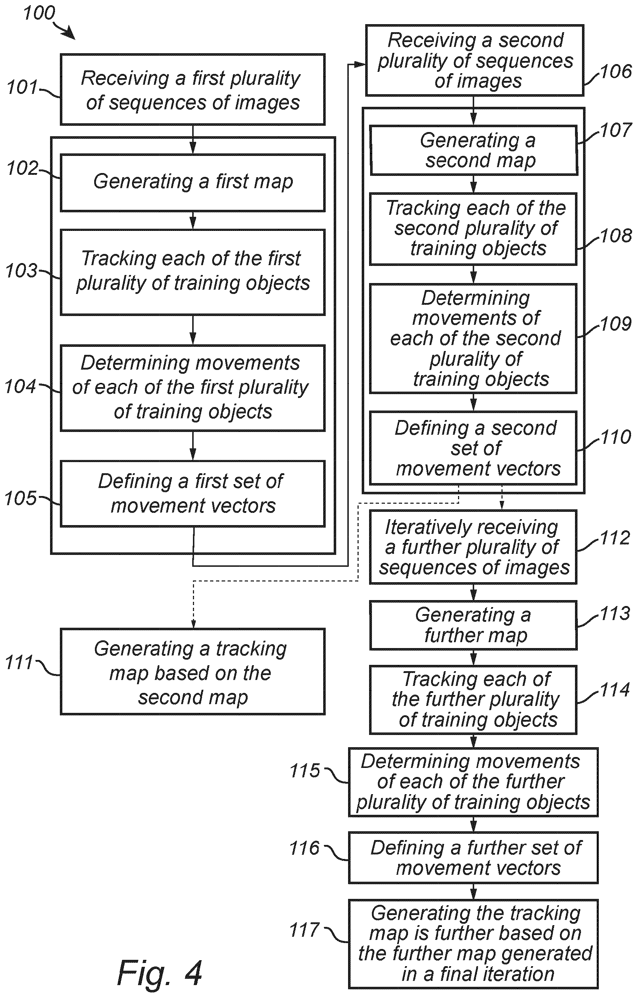

In Figs 1a-f, a method 100 for enabling tracking of an object in a flow channel 10 is presented. The method 100 may be a computer-implemented method 100. A flow chart of the method 100 is shown in Fig. 4 and reference is also made to Fig. 4 when describing the method 100 below.

The method 100 comprises receiving 101 a first plurality of sequences of images 11 representing movement of a first plurality of training objects 4a carried through the flow channel 10 in a first flow of liquid 2a.

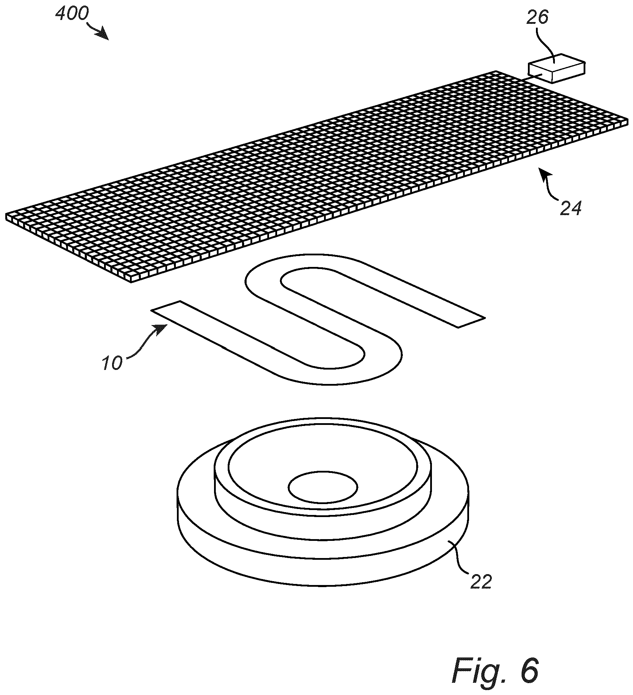

The first plurality of sequence of images 11 may be acquired using an imaging system 400 configured for detecting the first plurality of training objects 4a. The imaging system 400 is illustrated in Fig. 6. The imaging system 400 may comprise a light source 22 configured to illuminate the first set of training objects 4a in the flow channel 10 such that an interference pattern is formed by interference between light being scattered by the illuminated first set of training objects 4a and non-scattered light from the light source.

The light source 22 is configured to illuminate the first set of training objects 4a as they pass through the flow channel 10. The light source 22 may herein be a coherent light source, e.g. a laser, or a partially coherent light source, e.g. a light emitting diode or a light emitting diode with a pin hole or aperture. As the first set of training objects 4a are illuminated, an interference pattern is formed on an image sensor 24 of the imaging system 400. The image sensor 24 may comprise a plurality of photo-sensitive elements configured to detect incident light. The image sensor 24 may herein be a CCD or CMOS camera. The image sensor 24 may acquire a first plurality of sequences of images 11 from the changing interference pattern as the first set of training objects 4a pass the image sensor 24.

The imaging system 400 may further comprise a processor 26 which may process the information acquired from the image sensor 24. The imaging system 400 may e.g. perform a holographic reconstruction of two interference patterns in the time-sequence of interference patterns, to construct the first plurality of sequences of images 11.

The processor 26 may be a central processing unit (CPU) or a graphics processing unit (GPU), which may execute the instructions of one or more computer programs in order to provide desired functionality.

The processor 26 may alternatively be implemented as firmware arranged e.g. in an embedded system, or as a specifically designed processing unit, such as an Application-Specific Integrated Circuit (ASIC) or a Field-Programmable Gate Array (FPGA), which may be configured to implement desired functionality.

The processor 26 may be arranged in a common housing with the image sensor 24 and may be configured to receive the interference patterns in the time-sequence of interference patterns directly from the image sensor 24 for performing a holographic reconstruction. However, according to an alternative, the interference patterns in the time-sequence of interference patterns may be communicated through wired or wireless communication to the processor 26. Thus, the processor 26 may be physically arranged anywhere in relation to the image sensor 24, such as being arranged in a server "in the cloud".

As is illustrated in Fig. 1a, the method 100 further comprises generating 102 a first map representing associations between locations L in the flow channel 10 and movement vectors 3a from the first plurality of sequences of images. The generation 102 of the first map may be performed by the processor 26, which analyses the information acquired from the image sensor 24. In Fig. 1a is illustrated how a first plurality of training objects 4a are present at different locations L in the flow channel 10. For each location L, movement vectors 3a are determined.

The generating 102 of the first map comprises tracking 103 each of the first plurality of training objects 4a in the sequences of images 11.

The tracking may be performed by a tracker configured to track the detected first set of training objects 4a in the flow channel 10. The tracker acquires information from the imaging system 400, such as acquiring information from the image sensor 24 processed by the processor 26 to track the first set of training objects 4a through the flow channel 10. The tracker follows the position of each of the first set of training objects 4a through the flow channel 10, based on the first plurality of sequences of images 11.

The generating 102 of the first map further comprises determining 104 movements of each of the first plurality of training objects 4a between two consecutive images in the first plurality of sequences of images. Thus, between a first image and a second image, the movement of each of the of first plurality of training objects 4a are determined 104. Thus, the trajectory of each of the first plurality of training objects 4a between two consecutive images are determined 104. The first image and the second image may be images representing different fields of view of the flow channel 10 or may be images representing the same field of view of the flow channel 10.

The generating 102 of the first map further comprises defining 105 a first set of movement vectors 3a associated with locations L in the flow channel 10 based on the determined movements for each of the first plurality of training objects 4a. Thus, each of the first plurality of training objects 4a have a location L in a first frame and for each of those locations, the movement vector 3a is defined 105 by using the determined 104 movement between a first frame and a second frame of the first plurality of sequences of images 11.

By this, the first map as illustrated in Fig. 1b with movement vectors 3a from the locations L is defined.

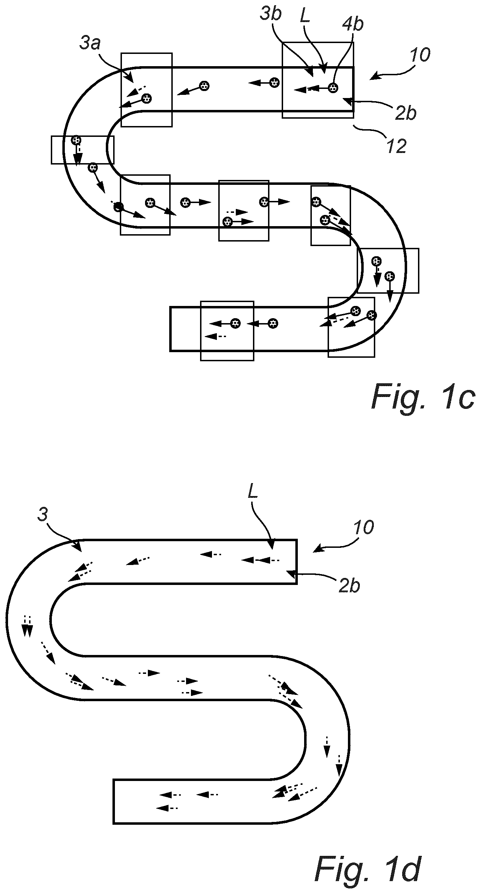

The method 100 further comprises receiving 106 a second plurality of sequences of images 12 representing movement of a second plurality of training objects 4b carried through the flow channel 10 in a second flow of liquid 2b. The second plurality of sequences of images 12 are acquired in a similar way as the first plurality of sequences of images 11. The second plurality of sequences of images 12 may be acquired at the same speed as the first plurality of sequences of images 11 or at a different speed. The field of view of the first plurality of sequences of images 11 may be the same or different compared to the second plurality of sequences of images 12. In Fig. 1c, the second plurality of sequences of images 12 covers a smaller field of view of the flow channel 10 compared to the first plurality of sequences of images 11.

The second plurality of training objects 4b may be of the same type of training objects as the first plurality of training objects 4a. However, there may as well be differences between the first plurality of training objects 4a and the second plurality of training objects 4b. As can be seen comparing Fig. 1a and Fig. 1c, the number of second plurality of training objects 4b are more than the first plurality of training objects 4a. This will be discussed in more detail below.

The second flow of liquid 2b may be the same type of liquid as the first flow of liquid 1b, or there may be a difference between the first flow of liquid 2a and the second type of liquid 2b. The speed of the flow of liquid may differ between the first flow of liquid 2a and the second flow of liquid 2b.

The method 100 further comprises generating 107 a second map representing associations between locations L in the flow channel 10 and movement vectors 3 from the second plurality of sequences of images 12. The generation 107 of the second map has similarities with the generation of the first map 102. The generation 107 of the second map comprises tracking 108 each of the second plurality of training objects 4b in the sequences of images by applying the first map on the flow channel 10. Thus, by using the first map as a map for the tracker, each of the second plurality of training objects are tracked 108. This is illustrated in Fig. 1c, where the first set of movement vectors 3a are applied to the flow channel 10 such that the movement of the second plurality of objects 4b are easier predicted. As is illustrated in Fig. 1c, not all of the first set of movement vectors 3a comprised in the first map correspond completely with the movement of the second plurality of objects 4b. Thus, the tracking of the second plurality of objects 4b allows the second map to be updated in relation to the first map in order to represent movements of training objects in the conditions used for tracking of the second plurality of training objects 4b.

The generation 107 of the second map further comprises determining 109 movements of each of the second plurality of training objects 4b between two consecutive images in the second plurality of sequences of images. Thus, the location L of each of the second plurality of training objects 4b are compared between a first image and a second image of the second plurality of sequences of images 12 and the movement between the first and the second image are determined 109.

The generation 107 of the second map further comprises defining 110 a second set of movement vectors 3b associated with locations L in the flow channel 10 based on the determined movements for each of the second plurality of training objects 4b. Thus, with the mapping from the first map allowing easier prediction of the movement and thereby the tracking 107 of the plurality of second training objects 4b, the second set of movement vectors 3b are accurately associated with the location L of the flow channel 10. Thus, the second set of movement vectors 3b comprises the information from the movement of the first plurality of training objects 4a and the second plurality of training objects 4b.

The method 100 further comprises generating 111 a tracking map based on the second map. The tracking map represents associations between locations L in the flow channel 10 and movement vectors 3 enabling tracking of the object 4 in the flow channel 10. The tracking map is illustrated in Fig. 1d. The tracking map comprises information from the tracking 103 of the first plurality of training objects 4a and the tracking 108 of the second plurality of training objects 4b.

A condition of the flow of liquid 2 in the flow channel 10 or of acquiring of sequences of images is changed between the first plurality of sequences of images 11 and the second plurality of sequences of images 12. As has been illustrated in Figs. 1a to 1d, the number of objects may change between the first plurality of sequences of images 11 and the second plurality of sequences of images 12. Moreover, the speed of the flow of liquid 2a, 2b may change between the first plurality of sequences of images 11 and the second plurality of sequences of images 12. The number of images acquired in the first plurality of sequences of images 11 and the second plurality of sequences of images 12, or the frame rate of the acquisition of the first plurality of sequences of images 11 and the second plurality of sequences of images 12, may change.

The conditions may change such that the conditions for tracking the second plurality of training objects 4b more closely reflects the final conditions while tracking the object compared to the conditions for tracking the first plurality of training objects 4a.

The method 100 may comprise further iterations. Thus, as illustrated in Fig. 1c, the method may further comprise iteratively 112 receiving a further plurality of sequences of images 13 representing movement of a further plurality of training objects 4c carried through the flow channel 10 in a further flow of liquid 2c. The further plurality of training object 3c may be similar or different objects compared to the first and the second plurality of training objects 4a, 4b. The further plurality of sequences of images 13 may be acquired in a similar manner as the first plurality of sequences of images 11 and the second plurality of sequences of images 12. The further plurality of sequences of images 13 may be acquired at a different frame rate as compared to the first plurality of sequences of images 11 and the second plurality of sequences of images 12.

The further iteration of the method 100 may further comprise generating 113 a further map representing associations between locations L in the flow channel 10 and movement vectors 3c from the further plurality of sequences of images 13. Thus, the method 100 iteratively generates 113 a further map comprising the movement vectors 3c from each location L of the flow channel 10. The more locations L represented in the tracking map, the better predictions are provided by the tracking map.

The generating 113 comprises tracking 114 each of the further plurality of training objects 4c in the sequences of images 13 by applying a map generated in a previous iteration on the flow channel 10. Thus, the map generated from the previous iteration is applied to the flow channel 10 such that the tracking of the further plurality of training objects 4c are more accurate. For instance, if it is the third iteration, the second map is applied to the flow channel 10 to improve the tracking of the third plurality of training objects 4c.

The generating 113 comprises determining 115 movements of each of the further plurality of training objects 4c between two consecutive images in the further plurality of sequences of images 13. Thus, from the tracking, the movement of each of the further training objects 4c are determined 115. In other words, from the tracking, the movement of each of the further plurality of training objects 4c between a first and a second image are determined. This is repeated throughout the entire sequence of images 13 such that the movement between all consecutive images are determined 115.

The generating 113 comprises defining 116 a further set of movement vectors 3c associated with locations L in the flow channel 10 based on the determined movements for each of the further plurality of training objects 4c. Thus, each location is associated with a movement vector 3c.

A condition of the flow of liquid 2c in the flow channel 10 or of acquiring of sequences of images is changed between each iteration. Thus, the number of training objects 4a, 4b, 4c may change between the iterations. The speed of the flow of liquid 2a, 2b, 2c may change between the iterations. The acquisition rate or the field of view of the plurality of sequences of images 11, 12, 13, may change. The conditions may change such that accurate tracking is harder for each iteration.

The generating 111 of the tracking map is further based on the further map generated in a final iteration. Thus, generating 111 the final tracking map may depend on several iterations, such as 2, 5, 10, or 100 iterations depending on the need for changing the conditions and the difficulties of tracking the object in the final condition.

Having more iterations further allows the method to determine movement vectors 3a, 3b, 3c for a higher resolution of locations L in the flow channel 10 and with information relating to a higher proportion of the locations L. Thus, this gives the final tracking map information on more locations L of the flow channel 10.

Generating the final tracking map, regardless of the number of iterations, may comprise extrapolating information in the further map for representing associations between extrapolated locations L in the flow channel 10 and movement vectors 3, wherein the extrapolated locations L are not associated with a movement vector 3 in the further map generated in the final iteration.

This implies that even if the map generated in the final iteration does not provide an association of a particular location L with a movement vector 3 (e.g., because no training object during the iterations have passed through the location), the tracking map may be generated to provide associations between all locations L in the flow channel 10 and movement vectors 3.

An extrapolated location L may be associated with a movement vector 3 based on movement vectors 3 associated with neighboring locations L.

The method 100 may be adapted for acquiring three dimensional information of the training objects 3a, 3b, 3c carried by the flow of liquid 2a, 2b, 2c through a flow channel 10 having a certain vertical depth. The vertical position of the training objects 4a, 4b, 4c may have an effect on their movement behavior through the flow channel 10.

Thus, the receiving 101 of the first plurality of sequences of images 11 representing movement of the first plurality of training objects 4a carried through the flow channel 10 in the first flow of liquid 2a may comprise receiving information of the vertical positions of the first plurality of training objects 4a in the flow channel 10 in addition to horizontal positions in a plane along which the flow channel 10 extends. Thus, the information on the vertical position of the first plurality of training objects 4a may include information on how the first plurality of training objects 4a moves both in the vertical and horizontal direction through the flow channel 10. Under different conditions, the first plurality of training objects 4a may move differently in the vertical position compared to under other conditions and this may be important for the final tracking map to be accurate.

Moreover, the generation 102 of the first map representing associations between locations L in the flow channel 10 and movement vectors 3a from the first plurality of sequences of images 11 further comprises determining vertical movements of each of the first plurality of training objects 4a. Thus, the first map represents the movement of the first plurality of training objects 4a in all three dimensions. This may improve the tracking of the object.

Further, the defining 105 of the first set of movement vectors 3a may then comprise defining the first set of movement vectors 105 in three dimensions. As such, the movement vectors 3a of Figs 1a and 1b have a vertical component as well as the two-dimensional horizontal component.

The receiving 106 of the second plurality of sequences of images 12 representing movement of the second plurality of training objects 4b carried through the flow channel 10 in the second flow of liquid 2b of course may also comprise receiving information of vertical positions of the second plurality of training objects 4b in the flow channel 10. If the information gathered about the first plurality of training objects 4a is in three dimensions, the information of the second plurality of training objects 4b preferably should also be in three dimensions. Since the first map is used to predict the movement of the second plurality of training objects 4b, having the vertical position of the second plurality of training objects 4b further increases the tracking of the objects.

Thus, the determining 109 movements of each of the second plurality of training objects 4b between two consecutive images in the second plurality of sequences of images 12 further comprises determining vertical movements of each of the second plurality training objects 4b. Thus, as with the first plurality of training objects 4a, the vertical movement between two consecutive frames of the second plurality of training objects 4b are determined and the defining 110 of the second set of movement vectors 3b comprises defining the second set of movement vectors 3b in three dimensions.

By this, the generation 111 of the tracking map based on the second map comprises associations between locations L in the flow channel 10 and movement vectors 3 comprising information from three dimensions.

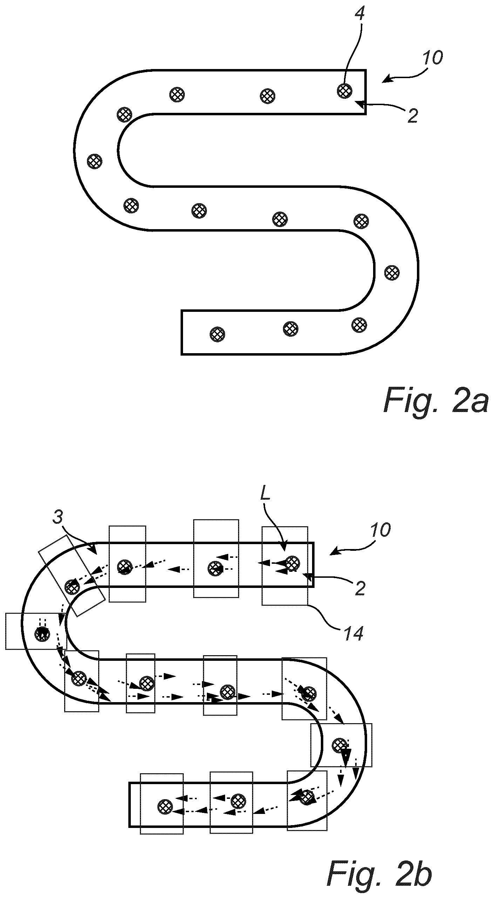

Fig. 2a illustrates a flow channel 10 comprising a flow of liquid 2 carrying an object 4. The flow channel 10 may be a microfluidic channel. The flow channel 10 may be defined in any manner, such as using conventional manufacturing technology, for example involving lithography. The flow channel 10 may be the same flow channel 10 used in generating a tracking map by the method 100 as described above. Alternatively, the flow channel 10 used for providing the flow of liquid 2 carrying the object 4 may be a similar flow channel, such as a flow channel manufactured by the same manufacturing line although not being the same specimen. Thus, the flow channel 10 may have the same or similar characteristics as described above.

The objects 4 may be biological cells, biological objects such as extracellular vesicles such as exosomes and/or other lipid nanoobjects or synthetic (bio)objects displaying specific antigens/receptors e.g. used for drug delivery.

As mentioned above, for analyzing the object 4, tracking of the object 4 may be preferred, as it allows for the object 4 to be followed through the flow channel 10. The tracking of the object 4 may utilize the tracking map generated by the method 100 as described above. The tracking map may be generated for the same flow channel 10 which is being used for the flow of liquid 2 carrying the object 2. Thus, the tracking map may be particularly adapted for providing tracking of objects 4 being transported through the flow channel 10.

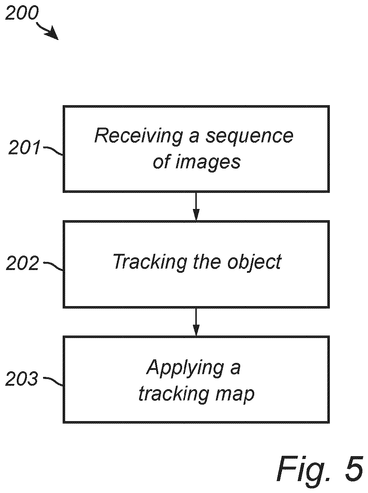

Fig. 2b illustrates the method 200, for tracking the object 4 in the flow channel. The method 100 may be a computer-implemented method 200. A flow chart of the method 200 is shown in Fig. 5 and reference is also made to Fig. 5 when describing the method 200 below.

The method comprises receiving 201 a sequence of images 14 of a flow of liquid 2 including the object 4 through the flow channel 10. The sequence of images 14 may be acquired using the same or a similar imaging system 400 as described above in relation to the method 100 for generating the tracking map. The imaging system 400 may use the same or similar settings as are being used at least in the final iteration of the generating of the tracking map.

Thus, the imaging system 400 used for acquiring the sequence of images 14 may have the same or similar characteristics as described above. For instance, the imaging system 400 may comprise a light source 22 configured to illuminate the objects 4 in the flow channel 10 such that an interference pattern is formed on an image sensor 24 of the imaging system 400.

The imaging system 400 may further comprise a processor 26 which may process the information acquired from the image sensor 24. The processor 26 may e.g. perform a holographic reconstruction of two interference patterns in the time-sequence of interference patterns, to construct the sequence of images 14. The processor 26 may be the same processor 26 used for generating the tracking map as described above or may be a different processor 26 that may function in a similar manner.

Further, the method 200 comprises tracking 202 the object 4 through the sequence of images 14. Thus, the object 4 is tracked as it moves through the flow channel 10. The tracking follows the object 4 through the flow channel 10 such that it can be used for, e.g., characterization or identification of the object 4. The characterization or identification may later be used to separate objects 4 based on the characterization or identification. The characterization or identification may further be used to analyze the effect of any treatment on the objects 4.

The tracking 202 comprises: applying 203 a tracking map on the flow channel 10, wherein the tracking map is generated by the method 100 as discussed above. The method 100 iteratively generated 111 a tracking map, based on the information from at least the first and second plurality of training objects. This tracking map is now used to track the object 4 through the sequence of images 14. With the help of the tracking map, the movement of the object 4 between two consecutive frames may be accurately predicted and the tracking may be more accurate than without the use of the tracking map.

The conditions used in the method 100 may be similar to the conditions present under the method 200 when tracking the object 4. Thus, the number of objects 4 may be similar to the final number of training objects, such as the number of second plurality of training objects 4b. The flow rate may be similar to the final flow rate, such as the flow rate of the second flow or liquid 2b. The rate of image acquisition may be similar to the last image acquisition rate, such as the rate of acquisition of the second plurality of sequence of images 13.

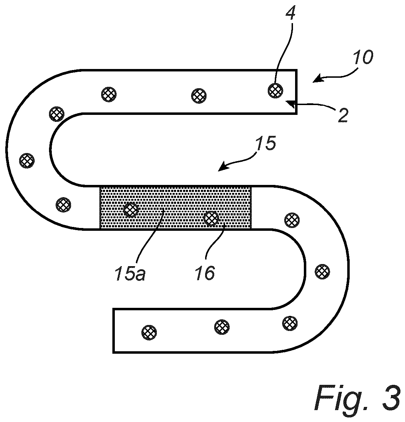

Fig. 3 illustrates the flow channel 10 comprising at least one zone 15. The at least one zone 10 is adapted for when the object 4 is a biological cell. The illustrated flow channel 10 comprises one zone, however it should be realized that the flow channel 10 could comprise a plurality of zones 15. The plurality of zones may be arranged with or without a space in between the zones 15.

Each zone 15 of the flow channel is 10 being associated with a cell category. The cell category may be determined by the molecules they comprise such as the molecules they comprise at the surface of the cell. For instance, biological cells may be characterized by the cell membrane of the biological cell. Thus, the cell 4 may be characterized by the association to at least one cell category or the association to no cell category associated to the flow channel 10. Molecules comprised in the cell surface may e.g. be antigens nanobodies, aptamers, lectins, receptors, antigens or molecularly imprinted polymers (MIPs). A way of checking whether a cell comprises a certain cell membrane molecule may be to let the cell interact with a molecule that binds specifically to said cell surface molecule. For example, an antigen comprised in the cell membrane, i.e., the cell surface of a biological cell, may correspond to one or more antibodies, where the antigen and antibody bind specifically to each other. Consequently, cells may be divided into cell categories depending on which cell surface molecules they comprise or which molecules the cells bind to.

Each zone 15 of the flow channel 10 comprises at least one surface 15a coated with molecules having an affinity to the cell category associated with the zone 15. If the flow channel 10 comprises a plurality of zones 15, the molecules coating the surface 15a of each of the zones 15 may differ or it may be the same type of molecules. The molecules on the surface 15a may be e.g. antibodies, aptamers, lectins, nanobodies, aptamers, lectins, receptors, antigens or molecularly imprinted polymers (MIPs). For example, the molecules of the surface15a of the at least one zone 15 may be anti-CD4 antibodies Thus, a cell category may be defined as cells 4 having a cell membrane comprising CD4 antigens.

Each zone may comprise obstacles. The obstacles may be in the form of pillars. In such a case, the at least one surface 15a of the zone 15 may be comprised on the obstacles, such as on the walls of pillars.

The at least one surface 15a of the zone 15 is configured to modify, by the molecules coating the at least one surface 15a, a movement of a cell 4 belonging to the associated cell category of the zone 15 as the cell 4 carried by the flow of liquid 2 passes the zone 15. Thus, during their travel through the flow channel 10, the cell 4 may repeatedly hit the at least one surface 15a of the at least one zone 14. When the cell 4 hits the surface 15a the molecules on the cell membrane may interact with molecules at the at least one surface 15a.

The at least one surface 15a forms at least one cell movement modifying, CMM, surface 16 wherein a cell belonging to the cell category is a cell exhibiting at least one modified movement in one zone 15 of the flow channel 10.

The method 100 may be used to predict the movement and thereby improve the tracking of cells 4 through the flow channel 10, when the cells 4 do not bind to the CMM surface 16. In other words, the tracking map may represent movements of objects or cells 4 when the cells 4 do not belong to the cell category. By this, the method may also be used for better determination of which cells 4 do belong to the cell category, as those cells will exhibit a different movement pattern while passing through the at least one zone 15. Thus, the cells 4 belonging to the cell category may be easier identified as their movement and thereby their tracking diverts from the predicted tracking generated by the tracking map.

As mentioned above, Fig. 4 illustrates a flowchart of method 100 for enabling tracking of an object 4 in a flow channel 10. The method 100 is summarized as follows. Receiving 101 a first plurality of sequences of images 11 representing movement of a first plurality of training objects 4a carried through the flow channel 10 in a first flow of liquid 2a; generating 102 a first map representing associations between locations L in the flow channel 10 and movement vectors 3 from the first plurality of sequences of images, wherein said generating 102 comprises: tracking 103 each of the first plurality of training objects 4a in the sequences of images 11; determining 104 movements of each of the first plurality of training objects 4a between two consecutive images in the first plurality of sequences of images 11; defining 105 a first set of movement vectors 3a associated with locations L in the flow channel 10 based on the determined movements for each of the first plurality of training objects 4a; receiving 106 a second plurality of sequences of images 12 representing movement of a second plurality of training objects 4b carried through the flow channel 10 in a second flow of liquid 2b; generating 107 a second map representing associations between locations L in the flow channel 10 and movement vectors 3 from the second plurality of sequences of images 12, wherein said generating 107 comprises: tracking 108 each of the second plurality of training objects 4b in the sequences of images by applying the first map on the flow channel 10; determining 109 movements of each of the second plurality of training objects 4b between two consecutive images in the second plurality of sequences of images; defining 110 a second set of movement vectors 3b associated with locations L in the flow channel 10 based on the determined movements for each of the second plurality of training objects 4b; generating 111 a tracking map based on the second map, wherein the tracking map represents associations between locations L in the flow channel 10 and movement vectors 3 enabling tracking of the object 4 in the flow channel 10; wherein a condition of the flow of liquid 2 in the flow channel 10 or of acquiring of sequences of images is changed between the first plurality of sequences of images 11 and the second plurality of sequences of images 12.

The method 100 may further comprise: iteratively 112 receiving a further plurality of sequences of images 13 representing movement of a further plurality of training objects 4c carried through the flow channel 10 in a further flow of liquid 2c; and generating 113 a further map representing associations between locations L in the flow channel 10 and movement vectors 3c from the further plurality of sequences of images 13, wherein said generating 113 comprises: tracking 114 each of the further plurality of training objects 4c in the sequences of images 13 by applying a map generated in a previous iteration on the flow channel 10; determining 115 movements of each of the further plurality of training objects 4c between two consecutive images in the further plurality of sequences of images 13; defining 116 a further set of movement vectors 3c associated with locations L in the flow channel 10 based on the determined movements for each of the further plurality of training objects 4c; wherein a condition of the flow of liquid 2c in the flow channel 10 or of acquiring of sequences of images is changed between each iteration, wherein generating 111 the tracking map is further based on the further map generated in a final iteration.

As mentioned above, Fig. 5 illustrates a flowchart of method 200 an object 4 in a flow channel 10. The method 200 is summarized as follows.

The method 200 comprises: receiving 201 a sequence of images 14 of a flow of liquid 2 including the object 4 through the flow channel; tracking 202 the object 4 through the sequence of images 14, wherein the tracking 202 comprises: applying 203 a tracking map on the flow channel 10, wherein the tracking map is generated by the method 100 according to any one of the preceding claims.

The method 200 may comprise generating the tracking of each object 4 through the sequence of images 14 by comparing the position of each object 4 in each position of the flow channel to the applied movement map.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method (100) for enabling tracking of an object (4) in a flow channel (10), the method (100) comprising:
receiving (101) a first plurality of sequences of images (11) representing movement of a first plurality of training objects (4a) carried through the flow channel (10) in a first flow of liquid (2a);
generating (102) a first map representing associations between locations (L) in the flow channel (10) and movement vectors (3) from the first plurality of sequences of images, wherein said generating (102) comprises:
tracking (103) each of the first plurality of training objects (4a) in the sequences of images (11);
determining (104) movements of each of the first plurality of training objects (4a) between two consecutive images in the first plurality of sequences of images (11);
defining (105) a first set of movement vectors (3a) associated with locations (L) in the flow channel (10) based on the determined movements for each of the first plurality of training objects (4a);
receiving (106) a second plurality of sequences of images (12) representing movement of a second plurality of training objects (4b) carried through the flow channel (10) in a second flow of liquid (2b);
generating (107) a second map representing associations between locations (L) in the flow channel (10) and movement vectors (3) from the second plurality of sequences of images (12), wherein said generating (107) comprises:
tracking (108) each of the second plurality of training objects (4b) in the sequences of images by applying the first map on the flow channel (10);
determining (109) movements of each of the second plurality of training objects (4b) between two consecutive images in the second plurality of sequences of images;
defining (110) a second set of movement vectors (3b) associated with locations (L) in the flow channel (10) based on the determined movements for each of the second plurality of training objects (4b);
generating (111) a tracking map based on the second map, wherein the tracking map represents associations between locations (L) in the flow channel (10) and movement vectors (3) enabling tracking of the object (4) in the flow channel (10);
wherein a condition of the flow of liquid (2) in the flow channel (10) or of acquiring of sequences of images is changed between the first plurality of sequences of images (11) and the second plurality of sequences of images (12).

2. The method (100) according to claim 1, wherein the method (100) further comprises:
iteratively (112) receiving a further plurality of sequences of images (13) representing movement of a further plurality of training objects (4c) carried through the flow channel (10) in a further flow of liquid (2c); and
generating (113) a further map representing associations between locations (L) in the flow channel (10) and movement vectors (3c) from the further plurality of sequences of images (13), wherein said generating (113) comprises:
tracking (114) each of the further plurality of training objects (4c) in the sequences of images (13) by applying a map generated in a previous iteration on the flow channel (10);
determining (115) movements of each of the further plurality of training objects (4c) between two consecutive images in the further plurality of sequences of images (13);
defining (116) a further set of movement vectors (3c) associated with locations (L) in the flow channel (10) based on the determined movements for each of the further plurality of training objects (4c);
wherein a condition of the flow of liquid (2c) in the flow channel (10) or of acquiring of sequences of images is changed between each iteration, wherein generating (111) the tracking map is further based on the further map generated in a final iteration.

3. The method according to claim 2, wherein the conditions of the flow of liquid in the flow channel and of acquiring of sequences of images in the final iteration corresponds to conditions to be used for tracking of the objects in the flow channel.

4. The method according to claim 2 or 3, wherein generating the tracking map comprises extrapolating information in the further map for representing associations between extrapolated locations in the flow channel and movement vectors, wherein the extrapolated locations are not associated with a movement vector in the further map generated in the final iteration.

5. The method according to any one of claims 1 to 4, wherein the condition comprises the speed of the flow of liquid.

6. The method according to any one of claims 1 to 5, wherein the condition comprises the number of training objects in the flow of liquid.

7. The method according to any one of claims 1 to 6, wherein the condition comprises a frame rate of acquisition of the sequences of images, wherein acquisition of the first plurality of sequences of images is made at a first frame rate and the acquisition of the second plurality of sequences of images is made at a second frame rate, the first frame rate being higher than the second frame rate.

8. The method (100) according to any one of claims 1 to 7, wherein the receiving (101) of the first plurality of sequences of images (11) representing movement of the first plurality of training objects (4a) carried through the flow channel (10) in the first flow of liquid (2a) comprises receiving information of the vertical positions of the first plurality of training objects (4a) in the flow channel (10), wherein the generation (102) of the first map representing associations between locations (L) in the flow channel (10) and movement vectors (3a) from the first plurality of sequences of images (11) further comprises determining vertical movements of each of the first plurality of training objects (4a), wherein the defining (105) of the first set of movement vectors (3a) comprises defining the first set of movement vectors (105) in three dimensions; wherein the receiving (106) of the second plurality of sequences of images (12) representing movement of the second plurality of training objects (4b) carried through the flow channel (10) in the second flow of liquid (2b) comprises receiving information of vertical positions of the second plurality of training objects (4b) in the flow channel (10), wherein determining (109) movements of each of the second plurality of training objects (4b) between two consecutive images in the second plurality of sequences of images (12) further comprises determining vertical movements of each of the second plurality training objects (4b) and wherein the defining (110) of the second set of movement vectors (3b) comprises defining the second set of movement vectors (3b) in three dimensions.

9. The method (100) according to any one of claims 1 to 8, wherein the object (4) is a biological cell and wherein:
the flow channel (10) comprises at least one zone (15), each zone (15) of the flow channel (10) being associated with a cell category,
wherein each zone (15) of the flow channel (10) comprises at least one surface (15a) coated with molecules having an affinity to the cell category associated with the zone (15), the at least one surface (15a) of the zone (15) being configured to modify, by the molecules coating the at least one surface (15a), a movement of a cell (4) belonging to the associated cell category of the zone (15) as the cell (4) carried by the flow of liquid (2) passes the zone (15), whereby the at least one surface (15a) forms at least one cell movement modifying, CMM, surface (16),
wherein a cell belonging to the cell category is a cell exhibiting at least one modified movement in one zone (15) of the flow channel (10).

10. A method for (200) tracking an object (4) in a flow channel (10), said method (200) comprising:
receiving (201) a sequence of images (14) of a flow of liquid (2) including the object (4) through the flow channel (10);
tracking (202) the object (4) through the sequence of images (14),
wherein the tracking (202) comprises: applying (203) a tracking map on the flow channel (10), wherein the tracking map is generated by the method (100) according to any one of the preceding claims.

11. A computer program (300) product comprising computer-readable instructions such that when executed on a processor (26) the computer program product will cause the processor (26) to perform the method according to claim 1-8 or the method according to claim 9.

12. An imaging system (400) for enabling tracking of an object (4) in a flow channel (10), the imaging system (400) comprising:
a light source (22) configured to illuminate a first plurality of training objects (4a) and a second plurality of training objects (4b) respectively carried through the flow channel (10);
an imaging sensor (24) configured for detecting incident light from the light source (22);
a processor (26) configured for processing the information acquired by the imaging sensor (24) from the detected incident light;
wherein the processor (26) is further configured to perform the method (100, 200) according to claim 1-8 or the method according to claim 9.
